Europäisches Patentamt

European Patent Office

Office européen des brevets

(19)

(11) **EP 1 516 529 A1**

(12) **EUROPEAN PATENT APPLICATION**

(43) Date of publication:
**23.03.2005 Bulletin 2005/12**

(51) Int Cl.7: **A01J 25/00**, A23C 19/068,
A23C 19/05

(21) Application number: **03425601.6**

(22) Date of filing: **17.09.2003**

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(71) Applicant: **S.p.A. Egidio Galbani
20066 Melzo (IT)**

(72) Inventor: **Bandirali, Pierluigi
c/o S.p.A. EGIDIO GALBANI
20149 MILANO (IT)**

(74) Representative: **Long, Giorgio et al
Jacobacci & Partners S.p.A.
Via Senato, 8
20121 Milano (IT)**

(54) **Process for the production of stretched cheese**

(57)     The present invention relates to a procedure for the production of stretched cheese, such as mozzarella.

In particular, the present invention relates to a process of cheese production for the preparation of stretched paste comprising the following steps :

A) determining the FM% and TNM% amount in the milk to be subject to the cheese production procedure;
B) calculating the quantity of citric acid to be added to said milk on the basis of said FM% and TNM% content;
C) adding said citric acid to said milk in milk recirculation regime;
D) reading the pH of the milk at a preset time after said addition and comparing the pH read with a reference value or with an interval of reference values;
E) If the pH read according to step D) is higher than said reference value or said interval of reference values, modify the flow of citric acid in relation to the flow of the milk, in milk recirculation regime, until the achievement of said pH reference value or interval of values; or
F) if the pH read according to step D) is equal to said reference value or lies within said interval of reference values, sending said milk acidified with citric acid to a subsequent coagulation step.

An apparatus studied for such a procedure is also described.

FIG.1

EP 1 516 529 A1

**Description**

The present invention relates to a procedure for the production of stretched cheese, such as mozzarella. More in particular, the present invention relates to a stretched cheese production procedure according to the technology that foresees the use of citric acid.

The process of milk acidification can be carried out either the natural way - by means of the use of microorganisms that cause lactic fermentation and therefore the acidification of the milk - or by directly adding lactic acid or citric acid. Acidification causes important structural and compositional modifications to both the protein (casein) and mineral fraction of the milk, modifying the pH and the ionic strength of the means. The abovementioned acidification step, common to almost all technological processes for preparing cheese, in any case has a particular importance in the production of stretched cheeses. In actual fact, it lends the matured (or drained) curd the attitude to be stretched. In other words, the calcium, present in the milk mainly in a colloid form, passes due to the effect of acidification - and proportionately to the degree of acidification - to a soluble form. In this way, the casein assumes a particular conformation that allows it, should it be subject to adequate thermal and mechanical stimuli, to polymerise and organise into fibres. Polymerised casein fibres and mineral salts, fat globules and water bonded to the protein structure will form the "matrix" of the cheese. Between the fibres and fat globules, in both the curd ready for stretching and in the stretched cheese, an aqueous solution will settle, not firmly bonded to the protein structure of the cheese and variable in composition according to the characteristics of the starting milk and the technology applied.

As mentioned, milk acidification can occur either by means of inoculation with lactic ferments or by the addition of an acid. The function of lactic ferments is of chemically attacking the lactose and producing by glycolysis lactic acid that acts as an acidifier. The use of lactic ferments, although more "natural", has in any case the disadvantage of requiring longer times for the acidification step and moreover, it does not permit the conservation of the organoleptic characteristics of the cheese for long periods, as the latter, under the continuous action of the live ferments, tends to make it rancid or bitter.

It is therefore potentially of interest to be able to use a technology that makes direct use of an acidic agent, with the advantage of shortening the times required for the fermentation process and preventing the persistence, in the finished product, of micro-organisms in activity.

Of the acids suggested for this process, attention has been focused on lactic acid and citric acid.

Lactic acid is the same acidifier produced by the ferments. It is therefore the most obvious choice for the chemical process.

On the other hand, citric acid has a further chelating effect on calcium and it therefore favours the modification of the structure of the casein, which is useful for the stretching process. This characteristic permits a reduction in the processing times of the stretched cheese. However, the use of citric acid in the milk acidification step presents a number of problems that have discouraged its diffusion. In actual fact, the excessive complexing effect on the calcium ions can destabilise the curd matrix to the point that it can drastically diminish productivity, given as weight of stretched cheese per unit volume of the milk initially loaded. Therefore, the stretched cheese production procedure used in the state of the art is characterised, due to the cause of the low productivity complained of above, by high production costs that vanquish the timesavings due to the use of citric technology.

The problem that underlies the present invention is therefore that of making available a procedure for producing stretched cheese that is characterised by high productivity, in terms of both reduced processing times and high cheese production yield.

This problem is solved by a procedure as outlined in the attached claims.

Further characteristics and advantages for the stretched cheese production procedure object of this invention will be made clearer by the description of an embodiment, made here below as a non-limiting example, with reference to the following figures:

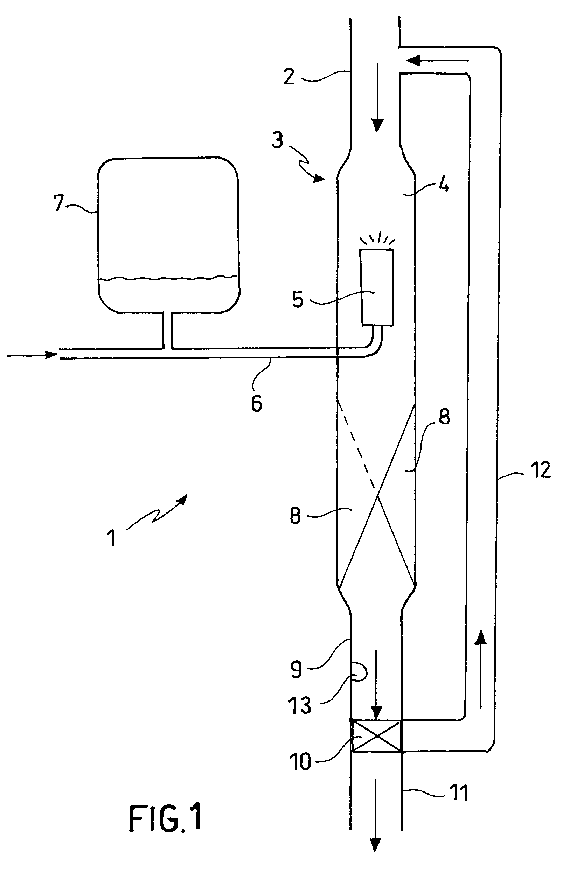

Figure 1 represents a schematic view in section of the mixing device for the citric acid and milk according to the present invention.

The procedure according to the present invention is the result of experiments carried out on various samples of milk with different fatty matter (FM) and total nitrogenised matter (TNM) content. The basic concept that subtends to the present invention is that the citric acid has a dual effect: i) it acts on the milk's pH, causing an acidification of it, in part compensated by the buffering power of the milk itself; ii) has a chelating effect on the calcium present in the milk as a colloid complex with the casein, thus destabilising this complex and therefore taking the calcium to a solution (calcium citrate). This second effect leads to the so-called "demineralisation" of the milk, which, as discussed previously, confers to the curd the stretching properties required by this type of application. However, we have already been able to note that an excessive demineralisation is cause of a low yield in curd. The degree of demineralisation of the milk is expressed by the $Ca_{sol}/Ca_{tot}$ ratio, where $Ca_{sol}$ is the calcium taken to a solution as calcium citrate for the treatment of the milk with citric acid, whereas Catot is the total calcium originally present in the untreated milk.

It has been found that, at equal citric acid added to different milk samples, the pH and the $Ca_{sol}/Ca_{tot}$ ratio obtained after addition will depend in general on the contents in FM and TNM of the milk before the treatment.

On the other hand, it has also been seen that, in order to obtain a stretched paste with optimal characteristics - in terms of both the ease of stretching and the organoleptic characteristics of the finished product - it is important that the pH and the $Ca_{sol}/Ca_{tot}$ ratio in the acidified milk before curdling, are within well-defined intervals. In particular, it is important that the pH remains between 5.65 and 5.85, preferably between 5.70 and 5.80, and that the $Ca_{sol}/Ca_{tot}$ ratio is between 0.48 and 0.53. More in particular, according to the type of product desired, in other words the calibre of the product, the optimal $Ca_{sol}/Ca_{tot}$ ratio values may vary. For example, in the case of mozzarella in small pieces (ball mozzarella), the $Ca_{sol}/Ca_{tot}$ ratio values should preferably be between 0.50 and 0.52, whereas in the case of slices of mozzarella in the shape of ingots, the $Ca_{sol}/Ca_{tot}$ ratio values will preferably be between 0.48 and 0.49.

Therefore, the quantity of citric acid that is added to the milk will depend on both the initial amount in FM and TNM of the milk and the pH and $Ca_{sol}/Ca_{tot}$ ratio values that are desired in the acidified milk before curdling, values which must be within the intervals outlined above.

Another fundamental parameter of the invention procedure is the way the citric acid is added. In actual fact, although having determined the optimal quantity of citric acid to be added to the milk, it has been seen that if the milk comes into contact with citric acid with too high a concentration, it creates areas around the point of introduction into the milk of the citric acid where the overconcentration of the latter causes a marked local demineralisation and therefore negatively interferes with the yield of the production process. Citric acid will therefore preferably be added to the milk in the form of an aqueous solution having a concentration that is not excessively high, in order not to cause a marked local demineralisation of the milk itself. However, an excessively low concentration of citric acid also has the consequence of unduly diluting the milk with the water added, altering its chemical and physical properties. It is therefore an object of this invention to make available a way of adding citric acid to milk that does not cause the abovementioned drawbacks.

The relationship between the percentage of TNM in the initial milk and the $Ca_{sol}/Ca_{tot}$ ratio is not linear. Moreover, the $Ca_{sol}/Ca_{tot}$ ratio in the acidified milk increases exponentially with the increase in the quantity of citric acid added, whereas the relationship between the citric acid added and pH is substantially linear. It is therefore difficult to provide simple algorithms that allow theoretical planning of the trend of the procedure, the laws that govern it being somewhat complex. It should also be pointed out that the monitoring of the $Ca_{sol}/Ca_{tot}$ ratio during the industrial operative step is difficult to hypothesise, as it would require excessively long times, which are not compatible with production needs. It is however, much easier to keep under control the trend of the pH of the milk in the line, by means of a simple and rapid analysis with a pH-meter.

It was therefore seen that an efficient method for calculating the quantity of citric acid to be added to the milk is to construct a calibration function that forms, at different FM% and TNM% contents of the initial milk, a relationship between the quantity of citric acid to be added with the desired pH and $Ca_{sol}/Ca_{tot}$ ratio process values. Once this theoretical quantity of citric acid has been calculated, its effective addition into the milk must by regulated by monitoring in the line the pH of the milk at preset times after the addition.

The cheese production procedure according to this invention therefore includes the following steps :

A) determining the FM% and TNM% amount in the milk to be subject to the cheese production process;
B) calculating the quantity of citric acid to be added to said milk on the basis of said FM% and TNM% content;
C) adding said citric acid to said milk in milk recirculation regime;
D) reading the pH of the milk at a preset time after said addition and comparing the pH read with a reference value or with an interval of reference values;
E) if the pH read according to step D) is higher than said reference value or said interval of reference values, modifying the flow of citric acid in relation to the flow of the milk, in milk recirculation regime, until the achievement of said reference pH value or interval of values; or
F) if the pH read according to step D) is the same as said reference value or is within said interval of reference values, sending said acidified milk to a subsequent coagulation step.

Step A

The determination of the FM% and TNM% amount in the initial milk (step A of the procedure) can be carried out on the production line using suitable instrumental techniques. One suitable in line analysis technique of the FM% and TNM% amount is an infrared spectroscopy. The milk's fat and protein components absorb the infrared radiation at different wavelengths. The entity of this absorption is measured with a suitable spectrophotometer and the quantitative evaluation of the abovementioned fat and protein components is made using calibration lines or curves. In actual fact, the quantitative value is produced by the instrument automatically. One instrument suited to the purpose is MILKO SCAN S54B. Analysis is performed by taking a milk sample (preferably a sample of approximately 25 ml of milk), heating it to approximately 40°C and mixing it by agitation without the formation of froth. The sample thus treated is then subject to instrumental analysis.

Step B

The calculation of the quantity of citric acid to be added to the milk according to step B of the process is as said a function of the FM% and TNM% values determined in step A and is preferably performed by using a calibration function obtained by empirical experiments on various milk samples. The determination of the various parameters is performed as follows:

a) the FM% and TNM% amount is obtained using infrared spectroscopy, in the same way as described above for analysis during production;
b) the pH of the milk before, during and at various times after acidification is read by pH-meter in order to obtain values with approximation in the order of a hundredth of a unit;
c) the concentration of Ca ions($Ca_{tot}$) is determined by EDTA titration (as described in K.N. Pearce, The Complexometric Determination of Calcium in the Diary Product, New Zealand Dairy Res. Inst., pp. 113-115, 1977);
d) the $Ca_{sol}/Ca_{tot}$ ratio is calculated according to the equation shown below:

$$Ca_{sol}/Ca_{tot} = Ca_{tot\ permeated} \times (100 - FM\% - TNM\%) / 100.Ca_{tot}$$

where FM% and TNM% are calculated according to a) and $Ca_{tot\ permeated}$ is the concentration of calcium ions, determined according to c), in the permeate of a milk sample subject to ultrafiltration at 36°C and 3 bar of operating pressure on Biomax-30 76 mm High Flux polysulfone membrane or other equivalent membrane.

Both the determination of the pH and the calculation of the $Ca_{sol}/Ca_{tot}$ ratio are performed on the initial milk and on the acidified milk.
The pH and $Ca_{sol}/Ca_{tot}$ ratio values before and after acidification are tabulated for each FM% and TNM% amount value and an empirical calibration function is obtained. This calibration function will preferably have the form of a table in which, given the FM% and TNM% values of the milk at the outset, the quantity of citric acid to be added per unit of milk is shown in order to obtain a theoretical pH and predetermined $Ca_{sol}/Ca_{tot}$ ratio value.

Step C

As said previously, the way of adding citric acid to the milk is of fundamental importance to obtaining a good yield in curd.
The citric acid is added to the milk, preferably milk that has previously been pasteurised, in a sufficiently dilute aqueous solution so as not to provoke an excessive demineralisation of the milk around the point of contact. Aqueous solutions of citric acid with concentrations of between 2% and 35% by weight will generally be used. It is however preferable not to use an excessively dilute solution, in such a way as not to water down the milk. Preferred concentrations of citric acid in water will therefore be between 10% and 30% by weight, more preferably between 18% and 22% by weight .
The present invention also makes available an apparatus that has been particularly studied for operating said step of mixing citric acid to the milk. This apparatus is shown in figure 1.
This apparatus, indicated as a whole with the number 1, is positioned along the cheese production line and comprises an inlet tube 2, in which the milk to be acidified flows, which leads to means of mixing 3 the milk with the citric acid. These means of mixing 3 comprise, in short a mixing chamber 4, which takes the form of a portion with a wider diameter of said tube 3. Inside said mixing chamber 4 means of fluid injection 5 are arranged, suitable for injecting a solution of citric acid in the opposite direction to the milk. The means of injection 5 are preferably a diffuser or nebuliser.
Said means of injection 5 are in fluid communication, by means of a tube 6, with a source of citric acid solution. Means of pumping (not shown), preferably a piston pump, introduce the citric acid solution into the tube 6 under pressure. The tube 6 is in fluid communication with compensatory means of pressure 7, in particular with a tank kept in overpressure by compressed air.
Downstream from said means of injection 5, the mixing chamber 4 comprises turbulence generator means 8. Said turbulence generator means 8 are constituted, in the embodiment shown in the figure, by fins arranged along the inner wall of the mixing chamber 4 in such a way as to give the milk a helical or spiral flow.

The mixing chamber 4 also comprises an outlet tube 9, downstream from which suitable valvular means 10 (such as a two way valve or solenoid valve) send the acidified milk either to the subsequent coagulation step, along tube 11, or to recirculate the milk in head, through the recirculation tube 12.

Inside the outlet tube 9, upstream from said valvular means 10, the reading bulb of a pH-meter 13 will be arranged for the reading of the pH of the milk after acidification.

A command and control unit can also be provided in order to automate the process. In this case, the pH value read by the pH-meter 13 will be processed by said command and control unit, which will command the sending of the milk to recirculation or coagulation, as required.

The ways of adding the citric acid to the milk are the following. The milk is introduced into the loading tube 2, by suitable means of pumping, under pressure, preferably at a pressure of 1.5 - 2.5 bar, more preferably approximately 2 bar. The citric acid solution on the other hand is added to the milk in counterflow with an overpressure, preferably with an overpressure of between 0.3 and 0.7 bar, more preferably with an overpressure of approximately 0.5 bar. Preferably, the means of injection 5 of citric acid disperse the solution in minute drops, or nebulise the citric acid solution, in order to favour the contact between acid and milk. The subsequent turbulence generated by the means 8 provokes a perfect mixing of the milk and citric acid, thus preventing a damaging local demineralisation of the milk.

Steps D and E

The pH is read after an interval of time that can vary between 30 sec and 60 sec. from the addition of citric acid, preferably after 45 sec.

In order to obtain an optimal or in any case good quality stretchiness and consequentially good organoleptic characteristics of the stretched paste, it is important that pH before coagulation is between 5.65 and 5.95, preferably between approximately 5.70 and 5.85.

As said, the reading is performed in line, in order to correct the flow of the citric acid solution, in the initial milk recirculation step foreseen in the procedure, if the pH read does not correspond to that desired or in any case is not within the acceptable pH interval described above.

The pH reading takes place by means of a common pH-meter, whose bulb can be introduced directly into the flow of acidified milk (as in figure 1) or it can be external. In this case, the milk must be sampled in order to determine the pH.

Step F

If the pH read is compatible with the desired value or interval of values, the acidified milk recirculation step is interrupted and the milk is sent to the subsequent coagulation step.

Below is an example description of the invention procedure.

EXAMPLE 1 - Mozzarella preparation

Mozzarella cheese production was performed in a 400 1 tank. A 20% citric acid solution by weight was injected into the line by an apparatus such as that shown in figure 1, on outlet from the pasteuriser, before the tank is filled. The quantity of citric acid added was determined by means of a calibration function as described previously. The coagulation temperature and pH achieved at the end of filling were recorded.

The addition of the coagulating enzyme was performed under vigorous stirring, prolonged for further 30 seconds after addition. The dose of enzyme used was 8 ml/100 L of milk. The subsequent rest period that preceded flocculation served to stop the vortex motion of the milk.

The rupture of the curd was performed manually using a cutting organ with steel wire and with 12x12mm grates. The cut was made when the curd was judged to be of the right consistency, therefore regardless of the firming times.

The stirring of the curd was made manually and without interruptions during the processing period in the tank, for a period of 40 minutes.

Before discharge, the curd was left to rest for 3 min in order to guarantee the separation of the whey. The curd after drainage, which was carried out in 5 min, was placed on a grated trolley and left to rest in order to complete drainage in an hour at the most. In order to prevent a brusque lowering of the temperature, the curd was covered with a plastic film. Ten minutes before stretching, the curd was cut into blocks with sides of approximately 20 cm and subject to turning over. The stretching process was made using a discontinuous cycle stretching machine with plunging arm. The start of the stretching process was preceded by the passage of the blocks of curd in the cutter, in order to obtain slices of curd with an average thickness of approximately 8mm. The stretching liquid (water) was at a temperature of 85°C, the process duration time and the quantity of water used depended on the characteristics of the stretched curd. The mozzarellas obtained were immersed in water at 4° for 1 hour. The yield of the finished product was comparable to that that can be obtained using the traditional fermentation process.

By way of an example, the following table shows the process parameters relating to the addition of citric acid to milk with different TNM% content. In all the cases shown here, the procedure caused a good or optimal stretching and a stretched paste with good or excellent organoleptic characteristics. The yield in curd was comparable to that with the fermentation process.

Table 1

| TNM% | Citric acid solution 0.1 ml added/L milk | pH after acidification | $Ca_{sol}/Ca_{to}$ |
|------|-------------------------------------------|------------------------|---------------------|
| 3.27 | 61 | 5.85 | 0.53 |
| 3.25 | 61 | 5.82 | 0.52 |
| 3.40 | 52 | 5.82 | 0.47 |
| 3.35 | 55 | 5.92 | 0.46 |
| 3.66 | 73.7 | 5.74 | 0.50 |
| 3.66 | 83.7 | 5.69 | 0.55 |

As one can note from the previous description, the procedure according to the invention makes it possible to obtain good stretched paste yields by means of the technology that uses a step of acidification with citric acid in replacement of the fermentation process traditionally used. This leads to a better shelf life of the finished product and a drastic reduction in production costs.

In particular, the way of adding the citric acid makes it possible to overcome the drawback of excessive demineralisation of the curd observed in similar known state of the art procedures.

It is evident that that described is just one particular embodiment of the invention, to which a man skilled in the art will be able to make small alterations in order to adapt it to specific needs without deviating from the scope of the present invention.

**Claims**

1. A cheese production procedure for the preparation of stretched cheese comprising the following steps :

   A) determining the FM% and TNM% amount in the milk to be subject to the cheese production procedure;
   B) calculating the quantity of citric acid to be added to said milk on the basis of said FM% and TNM% amount;
   C) adding said citric acid to said milk in milk recirculation regime;
   D) reading the pH of the milk at a preset time after said addition and comparing the pH read with a reference value or interval of reference values;
   E) if the pH read according to step D) is higher than said reference value or said interval of reference values, modifying the flow of citric acid in relation to the flow of the milk, in milk recirculation regime, until said pH value or interval of reference values is reached or
   F) if the pH read according to step D) is equal to said reference value or is within said interval of reference values, sending said milk acidified with citric acid to a subsequent coagulation step.

2. The procedure according to claim 1, wherein the determination of the FM% and TNM% amount in the milk is performed using the infrared spectroscopy technique.

3. The procedure according to claim 1 or 2, wherein the quantity of citric acid to be added to the milk is determined by an empirical calibration function bearing the pH and $Ca_{sol}/Ca_{tot}$ ratio values before and after acidification according to the milk's FM% and TNM% content, said calibration function putting into relation, for every FM% and TNM% value of the starting milk, the quantity of citric acid to be added per unit of milk with the theoretical pH and $Ca_{sol}/Ca_{tot}$ ratio value.

4. The procedure according to claim 3, wherein the $Ca_{sol}/Ca_{tot}$ ratio is calculated according to the equation shown here:

$$Ca_{sol}/Ca_{tot} = Ca_{tot\ permeated} \times (100 - FM\% - TNM\%) \ /$$

$$100.Ca_{tot}$$

where FM% and TNM% are calculated using the infrared spectroscopy technique, $Ca_{tot}$ is the total concentration of calcium ions and $Ca_{tot}$ permeated is the concentration of calcium ions in the permeate of a milk sample subject to ultrafiltration at 36° and 3 bar operating pressure on a Biomax-30 76 mm High Flux polysulfone membrane or another equivalent membrane, where the concentration of calcium ions is determined using EDTA titration.

5. The procedure according to any of claims 1 to 4, wherein said citric acid is added to the milk in aqueous solution with a concentration between 2% and 35% by weight .

6. The procedure according to claim 5, wherein said solution has a concentration of between 10% and 30% by weight .

7. The procedure according to claim 6, wherein said solution of citric acid in water has a concentration of between 18% and 22% by weight .

8. The procedure according to any of claims 1 to 7, wherein said citric acid is injected in counterflow to the milk.

9. The procedure according to claim 8, wherein said milk is at a pressure of 1.5 - 2.5 bar, preferably of approximately 2 bar.

10. The procedure according to claim 8 or 9, wherein the solution of citric acid is added to the milk with an overpressure with respect to the pressure of said milk.

11. The procedure according to claim 10, wherein said overpressure is between 0.3 and 0.7 bar, preferably approximately 0.5 bar.

12. The procedure according to claims 8 to 11, wherein said citric acid solution is nebulised.

13. The procedure according to claims 8 to 12, wherein said milk is in a turbulence condition.

14. The procedure according to any of claims 1 to 13, wherein the pH is read after a time that can vary from 30 sec to 60 sec from the addition of citric acid, preferably after 45 sec.

15. The procedure according to any of claims 1 to 14, wherein the pH before coagulation is between 5.65 and 5.95.

16. The procedure according to claim 15, wherein said pH is between approximately 5.70 and approximately 5.85.

17. Stretched cheese that can be obtained from a curd with a $Ca_{sol}/Ca_{tot}$ ratio of between 0.48 and 0.53, by means of the procedure as outlined in any of the claims 1 to 16.

18. Apparatus for the production of stretched cheese by non-fermentative acidification, comprising an input tube (2), in which the milk to be acidified flows, which leads to means of mixing (3) of the milk with said acid, said means of mixing (3) comprising a mixing chamber(4) inside which are positioned the means of injection (5) of a fluid, suited to injecting a solution of said acid in counterflow to the milk, said mixing chamber (4) comprising an outlet tube (9) in regulated flow communication with a tube (11) for delivery to a coagulation step or with a recirculation tube (12).

19. The apparatus according to claim 18, wherein said mixing chamber (4) is constituted by a portion with a greater diameter of said tube (3).

20. The apparatus according to claim 18 or 19, wherein said means of injection (5) are a diffuser or a nebuliser.

21. The apparatus according to any of claims 18 to 20, said apparatus comprising means of pumping for pumping said acid in overpressure in relation to the pressure of the milk and means of pressure compensation (7).

**22.** The apparatus according to any of claims 18 to 21, wherein said mixing chamber (4) comprises turbulence generator means (8), preferably constituted by fins arranged along the inner walls of the mixing chamber (4) in such a way as to give the milk a helical or spiral flow.

**23.** The apparatus according to any of claims 18 to 22, wherein inside said outlet tube (9) the bulb of a pH-meter (13) is arranged for the reading of the pH of the milk after acidification.

FIG.1

**EP 1 516 529 A1**

**European Patent Office**

**EUROPEAN SEARCH REPORT**

Application Number

EP 03 42 5601

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | JOSHI N S ET AL: "ROLE OF SOLUBLE AND COLLOIDAL CALCIUM CONTENTS AND FUNCTIONALITY OF SALTED AND UNSALTED PART-SKIM MOZZARELLA CHEESE" AUSTRALIAN JOURNAL OF DAIRY TECHNOLOGY, DAIRY INDUSTRY ASSN AUSTRALIA, HIGHETT VIC, AU, vol. 57, no. 3, October 2002 (2002-10), pages 203-210, XP001132599 ISSN: 0004-9433 | 1,3,5-7, 15,16 | A01J25/00 A23C19/068 A23C19/05 |
| X | * page 203 - page 204, right-hand column, paragraph 3 * --- | 17 | |
| Y | SALVADORI DEL PRATO O: "LA MOZZARELLA" IL LATTE, vol. 18, no. 5, 1993, pages 594-602, XP009025864 | 1,3,5-7, 15,16 | |
| X | * page 602, column 1, paragraph 3 - page 603, column 2 * --- | 17 | |
| Y | EP 0 515 318 A (VESELY MARCO EMILIO ;VESELY LEONARDO (IT)) 25 November 1992 (1992-11-25) | 1,3,5-7, 15,16 | TECHNICAL FIELDS SEARCHED (Int.Cl.7) A23C A01J |
| X | * column 3, line 10 - line 37 * --- | 17 | |
| Y | US 6 113 953 A (OBERG CRAIG J ET AL) 5 September 2000 (2000-09-05) | 1,3,5-7, 15,16 | |
| X | * column 6, line 4 - column 7, line 57; claims 2,12,21,32 * --- | 17 | |
| A | EP 0 636 311 A (EGIDIO GALBANI S P A) 1 February 1995 (1995-02-01) * column 2, line 1 - column 3, line 9; claim 1; figure 1 * ----- | 1,18 | |

The present search report has been drawn up for all claims

| Place of search | Date of completion of the search | Examiner |
|---|---|---|
| MUNICH | 13 February 2004 | Rinaldi, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 03 42 5601

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2004

| Patent document cited in search report | | Publication date | Patent family member(s) | | Publication date |
|---|---|---|---|---|---|
| EP 0515318 | A | 25-11-1992 | IT | 1247513 B | 17-12-1994 |
| | | | AT | 139671 T | 15-07-1996 |
| | | | DE | 69211777 D1 | 01-08-1996 |
| | | | DE | 69211777 T2 | 31-10-1996 |
| | | | DK | 515318 T3 | 16-09-1996 |
| | | | EP | 0515318 A1 | 25-11-1992 |
| | | | ES | 2091443 T3 | 01-11-1996 |
| | | | GR | 3020969 T3 | 31-12-1996 |
| | | | IE | 921261 A1 | 04-11-1992 |
| | | | US | 5431946 A | 11-07-1995 |
| US 6113953 | A | 05-09-2000 | NONE | | |
| EP 0636311 | A | 01-02-1995 | IT | 1260672 B | 22-04-1996 |
| | | | EP | 0636311 A1 | 01-02-1995 |

EPO FORM P0459

For more details about this annex : see Official Journal of the European Patent Office, No. 12/82